# EUROPEAN PATENT APPLICATION

(11) **EP 4 592 813 A1**
(43) Date of publication of application: **30.07.2025**
(21) Application number: 25151994.8
(22) Date of filing: 15.01.2025
(51) Int. Cl.: G06F 3/12, H04N 1/00

(54) **PRINT SPEED SETTING SYSTEM CAPABLE OF CHANGING PRINT SPEED OF IMAGE FORMING APPARATUS INCAPABLE OF COMMUNICATING VIA NETWORK, IMAGE FORMING APPARATUS, AND PRINT SPEED SETTING METHOD**

(30) Priority: 23.01.2024 JP 2024007878
(71) Applicant: KYOCERA Document Solutions Inc., Osaka-shi, Osaka, 540-8585 (JP)
(72) Inventor: Tazuke, Koichiro, Osaka-shi, 540-8585 (JP); Morishita, Yosuke, Osaka-shi, 540-8585 (JP); Harada, Takashi, Osaka-shi, 540-8585 (JP)
(74) Representative: Plougmann Vingtoft a/s

(57) **Abstract**

A print speed setting system (100C) includes an information processing system and an image forming apparatus (4) capable of varying a print speed. The information processing system generates key data based on unique information unique to the image forming apparatus (4) and a designated print speed of the image forming apparatus (4), and outputs the generated key data to a mobile terminal (2) capable of wirelessly communicating with the image forming apparatus (4) without passing through other communication devices. The image forming apparatus (4) acquires the key data from the mobile terminal (2), specifies the designated print speed based on the acquired key data and the unique information of the image forming apparatus (4), and sets a print speed of the image forming apparatus (4) to the specified designated print speed.

## Description

### BACKGROUND

The present disclosure relates to a print speed setting system, an image forming apparatus, and a print speed setting method.

An image forming apparatus capable of changing a factory-set print speed based on license data transmitted from a server communicably connected via a network is known as the related art.

### SUMMARY

A print speed setting system according to an aspect of the present disclosure includes an information processing system and an image forming apparatus capable of varying a print speed. The information processing system includes a generation processing portion and an output processing portion. The generation processing portion generates key data based on unique information unique to the image forming apparatus and a designated print speed of the image forming apparatus. The output processing portion outputs the key data generated by the generation processing portion to a mobile terminal capable of wirelessly communicating with the image forming apparatus without passing through other communication devices. The image forming apparatus includes an acquisition processing portion, a specification processing portion, and a setting processing portion. The acquisition processing portion acquires the key data from the mobile terminal. The specification processing portion specifies the designated print speed based on the key data acquired by the acquisition processing portion and the unique information of the image forming apparatus. The setting processing portion sets a print speed of the image forming apparatus to the designated print speed specified by the specification processing portion.

An image forming apparatus according to another aspect of the present disclosure is capable of varying a print speed and includes an acquisition processing portion, a specification processing portion, and a setting processing portion. The acquisition processing portion acquires key data generated based on unique information unique to the image forming apparatus and a designated print speed of the image forming apparatus from a mobile terminal capable of wirelessly communicating with the image forming apparatus without passing through other communication devices. The specification processing portion specifies the designated print speed based on the key data acquired by the acquisition processing portion and the unique information of the image forming apparatus. The setting processing portion sets a print speed of the image forming apparatus to the designated print speed specified by the specification processing portion.

A print speed setting method according to another aspect of the present disclosure is executed in a print speed setting system including an information processing system and an image forming apparatus capable of varying a print speed, and includes a generation step and an output step executed in the information processing system, and an acquisition step, a specification step, and a setting step executed in the image forming apparatus. The generation step includes generating key data based on unique information unique to the image forming apparatus and a designated print speed of the image forming apparatus. The output step includes outputting the key data generated in the generation step to a mobile terminal capable of wirelessly communicating with the image forming apparatus without passing through other communication devices. The acquisition step includes acquiring the key data from the mobile terminal. The specification step includes specifying the designated print speed based on the key data acquired in the acquisition step and the unique information of the image forming apparatus. The setting step includes setting a print speed of the image forming apparatus to the designated print speed specified in the specification step.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a block diagram showing a configuration of a print speed setting system according to a first embodiment of the present disclosure;
Fig. 2 is a block diagram showing a configuration of a server in the print speed setting system according to the first embodiment of the present disclosure;
Fig. 3 is a block diagram showing a configuration of a terminal device in the print speed setting system according to the first embodiment of the present disclosure;
Fig. 4 is a block diagram showing a configuration of an image forming apparatus in the print speed setting system according to the first embodiment of the present disclosure;
Fig. 5 is a flowchart showing an example of first key data output processing executed in the print speed setting system according to the first embodiment of the present disclosure;
Fig. 6 is a flowchart showing an example of first print speed setting processing executed in the print speed setting system according to the first embodiment of the present disclosure;
Fig. 7 is a block diagram showing a configuration of a print speed setting system according to a second embodiment of the present disclosure;
Fig. 8 is a block diagram showing a configuration of a server in the print speed setting system according to the second embodiment of the present disclosure;
Fig. 9 is a block diagram showing a configuration of a terminal device in the print speed setting system according to the second embodiment of the present disclosure;
Fig. 10 is a block diagram showing a configuration of an image forming apparatus in the print speed setting system according to the second embodiment of the present disclosure;
Fig. 11 is a flowchart showing an example of second key data output processing executed in the print speed setting system according to the second embodiment of the present disclosure;
Fig. 12 is a flowchart showing an example of second print speed setting processing executed in the print speed setting system according to the second embodiment of the present disclosure;
Fig. 13 is a block diagram showing a configuration of a print speed setting system according to a third embodiment of the present disclosure;
Fig. 14 is a block diagram showing a configuration of a server in the print speed setting system according to the third embodiment of the present disclosure;
Fig. 15 is a block diagram showing a configuration of a terminal device in the print speed setting system according to the third embodiment of the present disclosure;
Fig. 16 is a block diagram showing a configuration of an image forming apparatus in the print speed setting system according to the third embodiment of the present disclosure;
Fig. 17 is a flowchart showing an example of key data input processing executed in the print speed setting system according to the third embodiment of the present disclosure;
Fig. 18 is a flowchart showing an example of third key data output processing executed in the print speed setting system according to the third embodiment of the present disclosure; and
Fig. 19 is a flowchart showing an example of third print speed setting processing executed in the print speed setting system according to the third embodiment of the present disclosure.

### DETAILED DESCRIPTION

Hereinafter, embodiments of the present disclosure will be described with reference to the attached drawings. It is noted that the following embodiments are each an example of embodying the present disclosure and do not limit the technical scope of the present disclosure.

### [First embodiment]

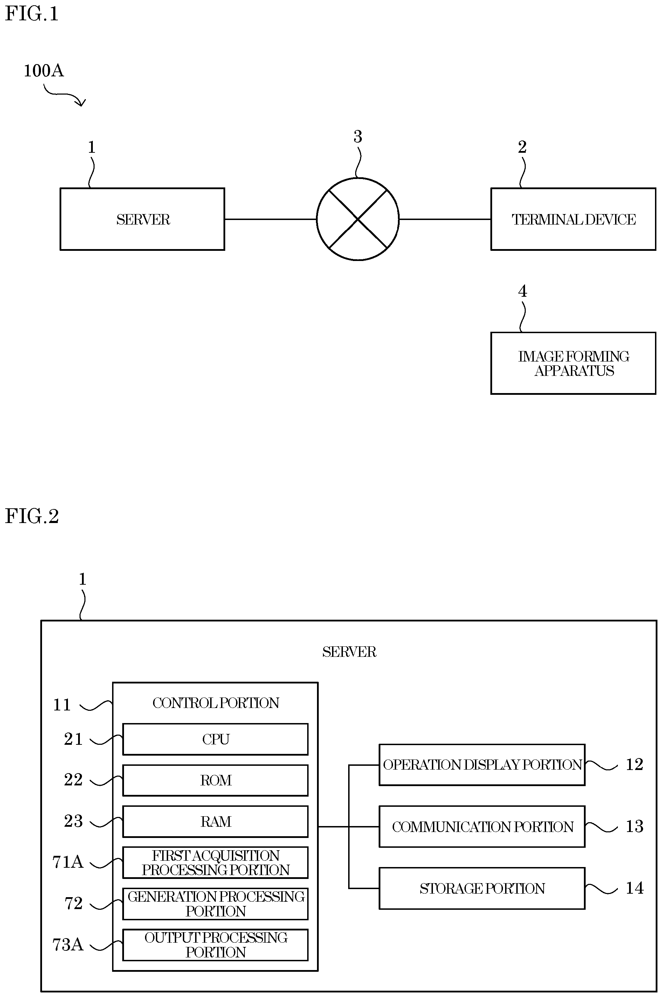

First, a configuration of a print speed setting system 100A according to a first embodiment of the present disclosure will be described with reference to Fig. 1 to Fig. 4.

As shown in Fig. 1, the print speed setting system 100A includes a server 1, a terminal device 2, and an image forming apparatus 4. In the print speed setting system 100A, the server 1 and the terminal device 2 are communicably connected to each other via a communication network 3. The image forming apparatus 4 does not have a communication function for communicating via the communication network 3. For example, the communication network 3 is the Internet or a LAN (Local Area Network). The server 1 and the terminal device 2 are an example of an information processing system according to the present disclosure. It is noted that the print speed setting system 100A may include a plurality of image forming apparatuses 4.

The server 1 is an information processing apparatus capable of issuing a license for changing a print speed of the image forming apparatus 4.

As shown in Fig. 2, the server 1 includes a control portion 11, an operation display portion 12, a communication portion 13, and a storage portion 14.

The control portion 11 collectively controls the server 1. As shown in Fig. 2, the control portion 11 includes a CPU 21, a ROM 22, and a RAM 23. The CPU 21 is a processor which executes various types of arithmetic processing. The ROM 22 is a nonvolatile storage device in which information such as control programs for causing the CPU 21 to execute various types of processing is stored in advance. The RAM 23 is a volatile or nonvolatile storage device that is used as a temporary storage memory (working area) for the various types of processing to be executed by the CPU 21. The CPU 21 executes the various control programs stored in advance in the ROM 22. Thus, the CPU 21 collectively controls the server 1.

The operation display portion 12 is a user interface of the server 1. The operation display portion 12 includes a first display portion and a first operation portion. The first display portion displays various types of information in response to control instructions from the control portion 11. For example, the first display portion is a flat panel display device such as a liquid crystal display. The first operation portion is used to input various types of information to the control portion 11 according to user operations. For example, the first operation portion includes a keyboard, a mouse, and a touch panel.

The communication portion 13 is a communication interface which executes wired or wireless data communication with an external communication device such as the terminal device 2 via the communication network 3.

The storage portion 14 is a nonvolatile storage device. For example, the storage portion 14 is a storage device such as a nonvolatile memory including a flash memory or the like, an SSD (Solid State Drive), and an HDD (Hard Disk Drive).

The terminal device 2 is an information processing apparatus that is used as a user interface of the server 1 at a distant location from the server 1. The terminal device 2 is provided in the vicinity of an installation position of the image forming apparatus 4. For example, the terminal device 2 is a mobile information processing apparatus such as a laptop personal computer, a smartphone, and a tablet terminal. It is noted that the terminal device 2 may alternatively be a stationary information processing apparatus.

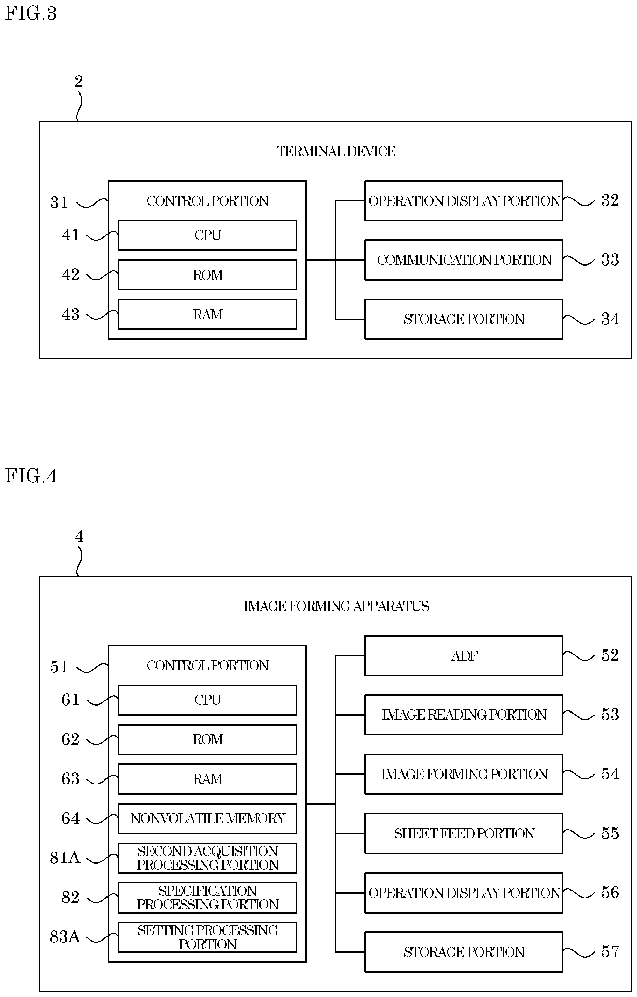

As shown in Fig. 3, the terminal device 2 includes a control portion 31, an operation display portion 32, a communication portion 33, and a storage portion 34.

The control portion 31 collectively controls the terminal device 2. As shown in Fig. 3, the control portion 31 includes a CPU 41, a ROM 42, and a RAM 43. The CPU 41, the ROM 42, and the RAM 43 have functions similar to those of the CPU 21, the ROM 22, and the RAM 23 of the server 1.

The operation display portion 32 is a user interface of the terminal device 2. The operation display portion 32 includes a second display portion and a second operation portion. The second display portion displays various types of information in response to control instructions from the control portion 31. For example, the second display portion is a flat panel display device such as a liquid crystal display. The second operation portion is used to input various types of information to the control portion 31 according to user operations. For example, the second operation portion includes an operation key and a touch panel.

The communication portion 33 is a communication interface which executes wired or wireless data communication with an external communication device such as the server 1 via the communication network 3.

The storage portion 34 is a nonvolatile storage device similar to the storage portion 14 of the server 1.

The image forming apparatus 4 is a multifunction peripheral having a plurality of functions such as a scanning function, a facsimile function, and a copying function along with a print function for forming an image on a sheet based on image data. It is noted that the image forming apparatus 4 may alternatively be a printer, a facsimile apparatus, a copying machine, or the like that has the print function.

As shown in Fig. 4, the image forming apparatus 4 includes a control portion 51, an ADF (Automatic Document Feeder) 52, an image reading portion 53, an image forming portion 54, a sheet feed portion 55, an operation display portion 56, and a storage portion 57.

The control portion 51 collectively controls the image forming apparatus 4. As shown in Fig. 4, the control portion 51 includes a CPU 61, a ROM 62, a RAM 63, and a nonvolatile memory 64. The CPU 61, the ROM 62, and the RAM 63 have functions similar to those of the CPU 21, the ROM 22, and the RAM 23 of the server 1. The nonvolatile memory 64 is a nonvolatile storage device.

The ADF 52 conveys a document sheet from which an image is to be read by the image reading portion 53. The ADF 52 includes a document sheet setting portion, a plurality of conveying rollers, a document sheet holder, and a sheet discharge portion.

The image reading portion 53 realizes the scanning function. The image reading portion 53 includes a document sheet table, a light source, a plurality of mirrors, an optical lens, and a CCD.

The image forming portion 54 realizes the print function. For example, the image forming portion 54 forms a color or monochrome image on a sheet supplied by the sheet feed portion 55 using electrophotography. For example, the image forming portion 54 includes a plurality of image forming units, a laser scanning unit, an intermediate transfer belt, a secondary transfer roller, a fixing device, and a sheet discharge tray. It is noted that the image forming portion 54 may form an image on a sheet supplied by the sheet feed portion 55 using other image forming systems such as an inkjet system.

The sheet feed portion 55 supplies sheets to the image forming portion 54. The sheet feed portion 55 includes a sheet feed cassette, a manual feed tray, and a plurality of conveying rollers.

The operation display portion 56 is a user interface of the image forming apparatus 4. The operation display portion 56 includes a third display portion and a third operation portion. The third display portion displays various types of information in response to control instructions from the control portion 51. For example, the third display portion is a flat panel display device such as a liquid crystal display. The third operation portion is used to input various types of information to the control portion 51 according to user operations. For example, the third operation portion includes an operation key and a touch panel.

The storage portion 57 is a nonvolatile storage device similar to the storage portion 14 of the server 1.

Herein, the image forming apparatus 4 is capable of varying a print speed. For example, the image forming apparatus 4 is capable of varying the print speed among a plurality of predetermined specific speeds.

For example, in the image forming apparatus 4, operation speeds of the image forming portion 54 and the sheet feed portion 55 are controlled in accordance with speed data stored in the nonvolatile memory 64 of the control portion 51. The speed data is data indicating any of the plurality of specific speeds. It is noted that at a time of factory shipment of the image forming apparatus 4, the speed data indicating a predetermined initial speed out of the plurality of specific speeds is stored in the nonvolatile memory 64.

Incidentally, an image forming apparatus capable of changing a factory-set print speed based on license data transmitted from the server 1 communicably connected via the communication network 3 is known as the related art.

In the related art described above, however, a print speed of an image forming apparatus that does not have the communication function for communicating via the communication network 3, like the image forming apparatus 4, cannot be changed.

In contrast, in the print speed setting system 100A according to the first embodiment of the present disclosure, it is possible to change the print speed of the image forming apparatus that does not have the communication function for communicating via the communication network 3 as will be described below.

Specifically, a key data output program for causing the control portion 11 to function as a first acquisition processing portion 71A, a generation processing portion 72, and an output processing portion 73A shown in Fig. 2 is stored in advance in the storage portion 14 of the server 1. The CPU 21 of the control portion 11 executes the key data output program to function as the respective processing portions described above.

Further, a print speed setting program for causing the control portion 51 to function as a second acquisition processing portion 81A, a specification processing portion 82, and a setting processing portion 83A shown in Fig. 4 is stored in advance in the storage portion 57 of the image forming apparatus 4. The CPU 61 of the control portion 51 executes the print speed setting program to function as the respective processing portions described above.

It is noted that some or all of the processing portions included in the control portion 11 of the server 1 may be constituted of an electronic circuit. Further, the key data output program may alternatively be a program for causing a plurality of processors to function as the respective processing portions shown in Fig. 2.

Furthermore, some or all of the processing portions included in the control portion 51 of the image forming apparatus 4 may be constituted of an electronic circuit. Further, the print speed setting program may be a program for causing a plurality of processors to function as the respective processing portions shown in Fig. 4.

The first acquisition processing portion 71A acquires unique information unique to the image forming apparatus 4 and a designated print speed of the image forming apparatus 4.

For example, the unique information is a serial number of the image forming apparatus 4. It is noted that the unique information only needs to be information used for individual identification of the image forming apparatus 4.

Further, the designated print speed is a print speed that has been designated from the plurality of specific speeds by a setting-authorized person who is authorized to set the print speed of the image forming apparatus 4. For example, the setting-authorized person is a maker (manufacturer) of the image forming apparatus 4. For example, a user of the image forming apparatus 4 signs a license agreement with the setting-authorized person so as to be permitted to use any of the specific speeds excluding the initial speed out of the plurality of specific speeds. It is noted that the designated print speed may be the initial speed.

For example, according to an access operation with respect to the server 1 performed in the operation display portion 32 of the terminal device 2, the first acquisition processing portion 71A causes the operation display portion 32 to display a first input screen used for inputting the unique information and the designated print speed. For example, in the first input screen, an input of one set of the unique information and the designated print speed is accepted. Then, the first acquisition processing portion 71A acquires the unique information and the designated print speed that have been input by the user operation performed in the first input screen.

The generation processing portion 72 generates key data based on the unique information and the designated print speed.

Specifically, the generation processing portion 72 generates the key data based on the unique information and the designated print speed acquired by the first acquisition processing portion 71A.

For example, a plurality of pieces of key generation data respectively corresponding to the plurality of specific speeds are stored in advance in the storage portion 14 of the server 1.

For example, the generation processing portion 72 acquires, from the storage portion 14, the key generation data corresponding to the designated print speed acquired by the first acquisition processing portion 71A. Further, the generation processing portion 72 executes encryption processing for encrypting, using the acquired key generation data as a common key, the unique information acquired by the first acquisition processing portion 71A according to a common key cryptography. Then, the generation processing portion 72 acquires the unique information encrypted by the encryption processing as the key data.

The output processing portion 73A outputs the key data generated by the generation processing portion 72.

Specifically, the output processing portion 73A causes the operation display portion 32 of the terminal device 2 to display the key data.

The second acquisition processing portion 81A acquires the key data input by the user operation to the image forming apparatus 4. The second acquisition processing portion 81A is an example of an acquisition processing portion according to the present disclosure.

Specifically, the second acquisition processing portion 81A causes the operation display portion 56 to display a second input screen (an example of an input screen according to the present disclosure) used for inputting the key data in accordance with a predetermined user operation performed in the operation display portion 56. Then, the second acquisition processing portion 81A acquires the key data input by the user operation performed in the second input screen.

The specification processing portion 82 specifies the designated print speed based on the key data acquired by the second acquisition processing portion 81A and the unique information of the image forming apparatus 4.

For example, a plurality of pieces of the key generation data respectively corresponding to the plurality of specific speeds are stored in advance in the storage portion 57 of the image forming apparatus 4.

For example, the specification processing portion 82 executes decryption processing for decrypting, using the key generation data as a common key, the key data (the encrypted unique information) acquired by the second acquisition processing portion 81A according to the common key cryptography, for each piece of the key generation data stored in the storage portion 57. Then, when succeeding in the decryption of the key data for any of the key generation data, the specification processing portion 82 specifies, as the designated print speed, the specific speed corresponding to the key generation data for which the decryption has succeeded. Further, when failing in the decryption of the key data for all pieces of the key generation data, the specification processing portion 82 determines that the specification of the designated print speed has failed.

The setting processing portion 83A sets the print speed of the image forming apparatus 4 to the designated print speed specified by the specification processing portion 82.

For example, the setting processing portion 83A stores the speed data indicating the designated print speed specified by the specification processing portion 82 in the nonvolatile memory 64 in place of the speed data stored in the nonvolatile memory 64.

Herein, the setting processing portion 83A irrevocably sets the print speed of the image forming apparatus 4 to the designated print speed specified by the specification processing portion 82.

For example, after the storage of the speed data indicating the designated print speed specified by the specification processing portion 82 in the nonvolatile memory 64, the setting processing portion 83A prohibits writing of data to the nonvolatile memory 64.

It is noted that alternatively, the setting processing portion 83A may changeably set the print speed of the image forming apparatus 4 to the designated print speed specified by the specification processing portion 82.

### [First key data output processing]

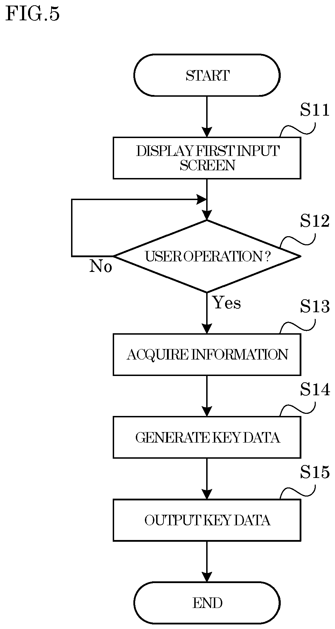

Hereinafter, with reference to Fig. 5, a part of a print speed setting method according to the present disclosure will be described along with exemplary procedures of first key data output processing executed by the control portion 11 of the server 1. Herein, Step S11, Step S12, ... represent numbers of processing procedures (steps) executed by the control portion 11. For example, the first key data output processing is executed when an access operation with respect to the server 1 is performed in the operation display portion 32 of the terminal device 2.

### <Step S11>

First, in Step S11, the control portion 11 causes the operation display portion 32 of the terminal device 2 to display the first input screen.

### <Step S12>

In Step S12, the control portion 11 determines whether or not a user operation to input the unique information and the designated print speed has been performed in the first input screen.

Herein, when determining that the user operation to input the unique information and the designated print speed has been performed (Yes in S12), the control portion 11 shifts the processing to Step S13. On the other hand, when determining that the user operation to input the unique information and the designated print speed has not been performed (No in S12), the control portion 11 waits for the user operation to input the unique information and the designated print speed in Step S12.

### <Step S13>

In Step S13, the control portion 11 acquires the unique information and the designated print speed input by the user operation performed in the first input screen. The processing from Step S11 to Step S13 is executed by the first acquisition processing portion 71A of the control portion 11.

### <Step S14>

In Step S14, the control portion 11 generates the key data based on the unique information and the designated print speed acquired by the processing of Step S13. The processing of Step S14 is an example of a generation step according to the present disclosure and is executed by the generation processing portion 72 of the control portion 11.

For example, the control portion 11 acquires, from the storage portion 14, the key generation data corresponding to the designated print speed acquired by the processing of Step S13. Further, the control portion 11 executes the encryption processing for encrypting, using the acquired key generation data as a common key, the unique information acquired by the processing of Step S13 according to the common key cryptography. Then, the control portion 11 acquires the unique information encrypted by the encryption processing as the key data.

### <Step S15>

In Step S15, the control portion 11 outputs the key data generated by the processing of Step S14. The processing of Step S15 is an example of an output step according to the present disclosure and is executed by the output processing portion 73A of the control portion 11.

Specifically, the control portion 11 causes the operation display portion 32 of the terminal device 2 to display the key data.

### [First print speed setting processing]

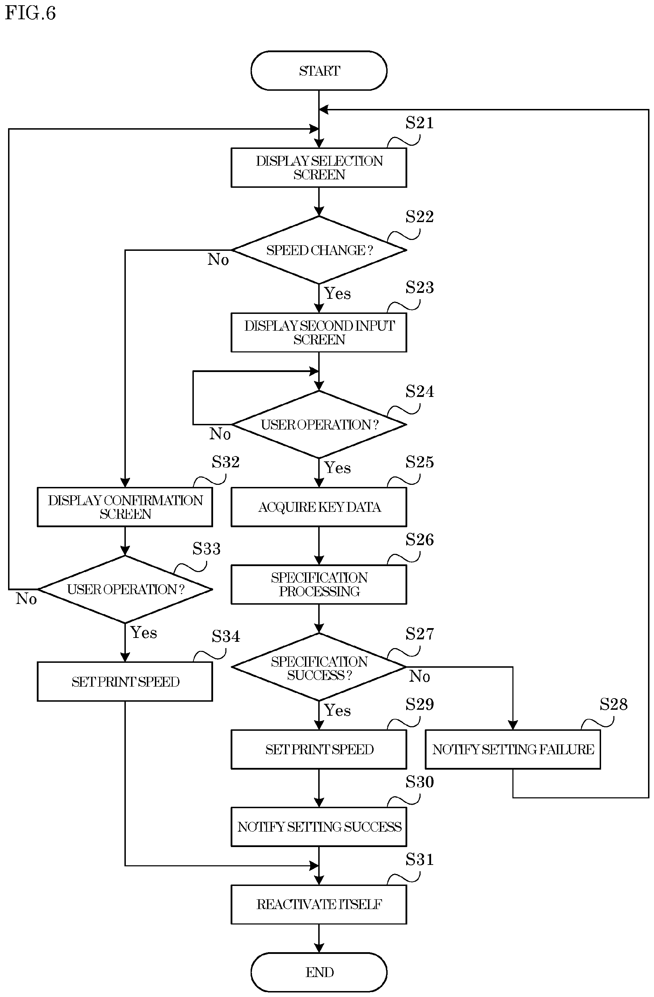

Next, with reference to Fig. 6, a remaining part of the print speed setting method according to the present disclosure will be described along with exemplary procedures of first print speed setting processing executed by the control portion 51 of the image forming apparatus 4. For example, the first print speed setting processing is executed when execution of the first print speed setting processing is instructed by the user operation performed in the operation display portion 56 in a state where writing to the nonvolatile memory 64 is not prohibited.

### <Step S21>

First, in Step S21, the control portion 51 causes the operation display portion 56 to display a selection screen used for selecting whether or not to change the print speed.

### <Step S22>

In Step S22, the control portion 51 determines whether or not a user operation to select a change of the print speed has been accepted in the selection screen.

Herein, when determining that the user operation to select a change of the print speed has been accepted (Yes in S22), the control portion 51 shifts the processing to Step S23. On the other hand, when determining that a user operation to not change the print speed has been accepted (No in S22), the control portion 51 shifts the processing to Step S32.

### <Step S23>

In Step S23, the control portion 51 causes the operation display portion 56 to display the second input screen.

### <Step S24>

In Step S24, the control portion 51 determines whether or not a user operation to input the key data has been performed in the second input screen.

Herein, when determining that the user operation to input the key data has been performed (Yes in S24), the control portion 51 shifts the processing to Step S25. On the other hand, when determining that the user operation to input the key data has not been performed (No in S24), the control portion 51 waits for the user operation to input the key data in Step S24.

### <Step S25>

In Step S25, the control portion 51 acquires the key data input by the user operation performed in the second input screen. The processing from Step S23 to Step S25 is an example of an acquisition step according to the present disclosure and is executed by the second acquisition processing portion 81A of the control portion 51.

### <Step S26>

In Step S26, the control portion 51 executes specification processing for specifying the designated print speed based on the key data acquired by the processing of Step S25 and the unique information of the image forming apparatus 4. The processing of Step S26 is an example of a specification step according to the present disclosure and is executed by the specification processing portion 82 of the control portion 51.

Specifically, the control portion 51 executes the decryption processing for decrypting, using the key generation data as a common key, the key data (the encrypted unique information) acquired by the processing of Step S25 according to the common key cryptography, for each piece of the key generation data stored in the storage portion 57. Then, when succeeding in the decryption of the key data for any of the key generation data, the control portion 51 specifies, as the designated print speed, the specific speed corresponding to the key generation data for which the decryption has succeeded. Further, when failing in the decryption of the key data for all pieces of the key generation data, the control portion 51 determines that the specification of the designated print speed has failed.

### <Step S27>

In Step S27, the control portion 51 causes the processing to branch depending on whether or not the specification of the designated print speed has succeeded in the processing of Step S26. Specifically, when succeeding in the specification of the designated print speed (Yes in S27), the control portion 51 shifts the processing to Step S29. On the other hand, when failing in the specification of the designated print speed (No in S27), the control portion 51 shifts the processing to Step S28.

### <Step S28>

In Step S28, the control portion 51 notifies that the setting (change) of the print speed has failed.

Specifically, the control portion 51 causes the operation display portion 56 to display a failure notification screen that includes a message notifying that the setting (change) of the print speed has failed. Then, the control portion 51 shifts the processing to Step S21 according to a user operation performed in the failure notification screen.

It is noted that before the failure notification screen is displayed since the user operation to input the key data has been accepted in the second input screen, a being-set notification screen that includes a message notifying that the print speed is being set is displayed on the operation display portion 56.

### <Step S29>

In Step S29, the control portion 51 sets the print speed of the image forming apparatus 4 to the designated print speed specified by the processing of Step S26. The processing of Step S29 is an example of a setting step according to the present disclosure and is executed by the setting processing portion 83A of the control portion 51.

Specifically, the control portion 51 stores the speed data indicating the designated print speed specified by the processing of Step S26 in the nonvolatile memory 64 in place of the speed data stored in the nonvolatile memory 64. In addition, after the storage of the speed data indicating the designated print speed specified by the processing of Step S26 in the nonvolatile memory 64, the control portion 51 prohibits writing of data to the nonvolatile memory 64.

It is noted that the control portion 51 only needs to shift the processing to Step S28 when failing to store the speed data indicating the designated print speed specified by the processing of Step S26 in the nonvolatile memory 64 or when failing to prohibit the writing of data to the nonvolatile memory 64.

### <Step S30>

In Step S30, the control portion 51 notifies that the setting (change) of the print speed has succeeded.

Specifically, the control portion 51 causes the operation display portion 56 to display a success notification screen that includes a message notifying that the setting (change) of the print speed has succeeded. Then, the control portion 51 shifts the processing to Step S31 after an elapse of a predetermined time since the start of the display of the success notification screen.

It is noted that before the success notification screen is displayed since the user operation to input the key data has been accepted in the second input screen, the being-set notification screen is displayed on the operation display portion 56.

### <Step S31>

In Step S31, the control portion 51 reactivates the image forming apparatus 4. Thus, the image forming apparatus 4 becomes printable at the print speed set by the processing of Step S29 or Step S34.

### <Step S32>

In Step S32, the control portion 51 causes the operation display portion 56 to display a confirmation screen used for selecting whether or not to continue the processing.

### <Step S33>

In Step S33, the control portion 51 determines whether or not a user operation to select continuance of the processing has been accepted in the confirmation screen.

Herein, when determining that the user operation to select continuance of the processing has been accepted (Yes in S33), the control portion 51 shifts the processing to Step S34. On the other hand, when determining that a user operation to select cancel of the processing has been accepted (No in S33), the control portion 51 shifts the processing to Step S21.

### <Step S34>

In Step S34, the control portion 51 sets the print speed of the image forming apparatus 4 to the initial speed.

Specifically, the control portion 51 prohibits the writing of data to the nonvolatile memory 64.

It is noted that the control portion 51 only needs to shift the processing to Step S28 when failing to prohibit the writing of data to the nonvolatile memory 64.

In this manner, in the print speed setting system 100A, the key data that is based on the unique information and the designated print speed is generated and output by the server 1. Further, the image forming apparatus 4 accepts the input of the key data by the user operation to the image forming apparatus 4, and sets the print speed based on the input key data. Thus, it becomes possible to change the print speed of the image forming apparatus 4 that does not have the communication function for communicating via the communication network 3.

### [Second embodiment]

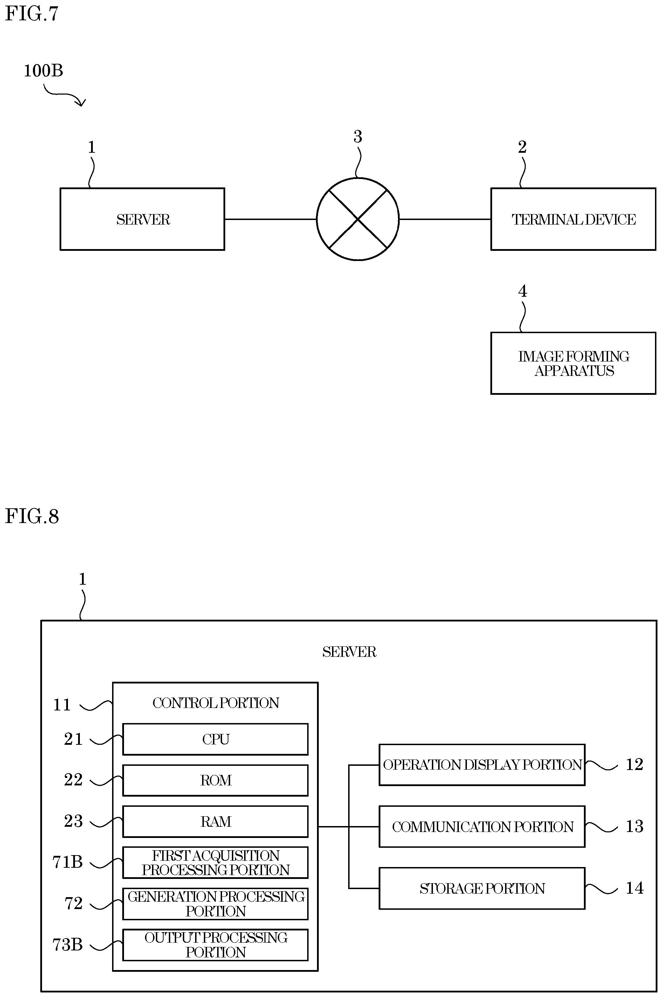

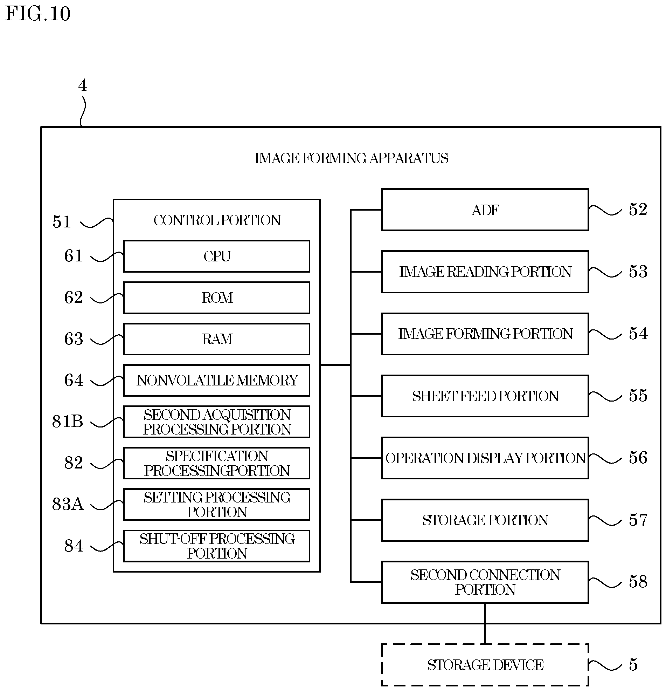

Next, a configuration of a print speed setting system 100B according to a second embodiment of the present disclosure will be described with reference to Fig. 7 to Fig. 10. It is noted that in Fig. 10, a storage device 5 connected to a second connection portion 58 is illustrated in a broken line.

As shown in Fig. 1 and Fig. 7, similar to the print speed setting system 100A, the print speed setting system 100B includes the server 1, the terminal device 2, and the image forming apparatus 4. In addition, the print speed setting system 100B includes the plurality of image forming apparatuses 4.

As shown in Fig. 2 and Fig. 8, the server 1 of the print speed setting system 100B differs from the server 1 of the print speed setting system 100A in the point of including a first acquisition processing portion 71B and an output processing portion 73B in place of the first acquisition processing portion 71A and the output processing portion 73A. It is noted that other points are common between the server 1 of the print speed setting system 100A and the server 1 of the print speed setting system 100B.

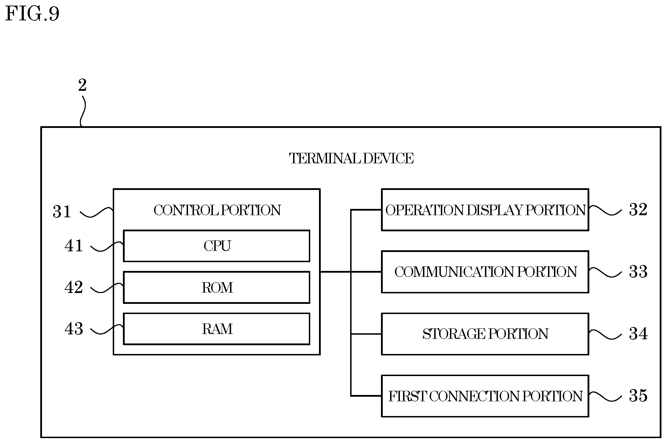

As shown in Fig. 3 and Fig. 9, the terminal device 2 of the print speed setting system 100B differs from the terminal device 2 of the print speed setting system 100A in the point of including a first connection portion 35. It is noted that other points are common between the terminal device 2 of the print speed setting system 100A and the terminal device 2 of the print speed setting system 100B.

As shown in Fig. 4 and Fig. 10, the image forming apparatus 4 of the print speed setting system 100B differs from the image forming apparatus 4 of the print speed setting system 100A in the point of including the second connection portion 58 and a shut-off processing portion 84. In addition, the image forming apparatus 4 of the print speed setting system 100B differs from the image forming apparatus 4 of the print speed setting system 100A in the point of including a second acquisition processing portion 81B in place of the second acquisition processing portion 81A. It is noted that other points are common between the image forming apparatus 4 of the print speed setting system 100A and the image forming apparatus 4 of the print speed setting system 100B.

The storage device 5 (see Fig. 10) is connected to the first connection portion 35. For example, the first connection portion 35 includes a USB connection terminal to/from which an external electronic device capable of inputting and outputting data based on a USB standard is attached/removed. In this case, the storage device 5 is a USB memory.

The storage device 5 (see Fig. 10) is connected to the second connection portion 58. The second connection portion 58 has a configuration similar to that of the first connection portion 35.

The first acquisition processing portion 71B acquires the unique information of the image forming apparatus 4 and the designated print speed of the image forming apparatus 4.

For example, the first acquisition processing portion 71B causes the operation display portion 32 to display a third input screen used for inputting the unique information and the designated print speed in accordance with an access operation with respect to the server 1 performed in the operation display portion 32 of the terminal device 2. For example, in the third input screen, inputs of a plurality of sets of the unique information and the designated print speed are accepted. Then, the first acquisition processing portion 71B acquires the unique information and the designated print speed input by the user operation performed in the third input screen.

In the print speed setting system 100B, the key data is generated by the generation processing portion 72 for each set of the unique information and the designated print speed input in the third input screen. Further, in the print speed setting system 100B, the unique information used for generating the key data is added to each piece of the key data generated by the generation processing portion 72. It is noted that when the designated print speed input in the third input screen is the initial speed, the key data does not need to be generated. In this case, only the unique information only needs to be output by the output processing portion 73B in place of the key data to which the unique information has been added.

The output processing portion 73B stores each piece of the key data to which the unique information has been added in the storage device 5 connected to the first connection portion 35.

In the print speed setting system 100B, the key data output by the output processing portion 73B is input to the image forming apparatus 4 by a user operation to connect the storage device 5 to the second connection portion 58.

The second acquisition processing portion 81B acquires the key data from the storage device 5 connected to the second connection portion 58. The second acquisition processing portion 81B is another example of the acquisition processing portion according to the present disclosure.

In the print speed setting system 100B, the specification processing portion 82 executes the specification processing for specifying the designated print speed for each piece of the key data acquired from the storage device 5 connected to the second connection portion 58. Specifically, the specification processing portion 82 executes the specification processing for each piece of the key data to which the unique information of the image forming apparatus 4 has been added out of the pieces of key data acquired from the storage device 5 connected to the second connection portion 58. It is noted that when the unique information to which the key data is not added is stored in the storage device 5 connected to the second connection portion 58, the specification processing portion 82 only needs to determine that the designated print speed corresponding to the unique information is the initial speed.

The shut-off processing portion 84 shuts off a power supply of the image forming apparatus 4 when the number of failed times of the specification processing reaches a predetermined upper limit number of times.

For example, the upper limit number of times is 200 times. It is noted that the upper limit number of times may be an arbitrary number of times.

### [Second key data output processing]

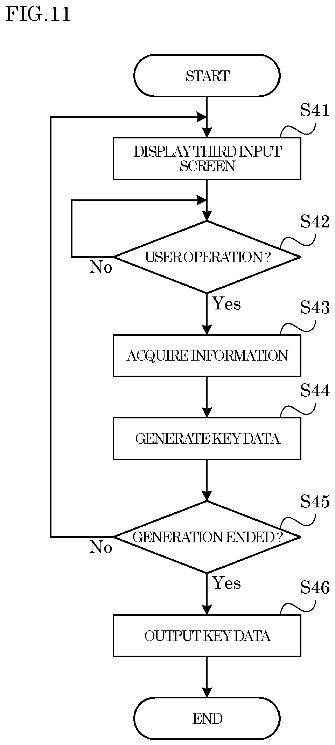

Hereinafter, with reference to Fig. 11, exemplary procedures of second key data output processing executed by the control portion 11 of the server 1 will be described. For example, the second key data output processing is executed when an access operation with respect to the server 1 is performed in the operation display portion 32 of the terminal device 2.

### <Step S41>

First, in Step S41, the control portion 11 causes the operation display portion 32 of the terminal device 2 to display the third input screen.

### <Step S42>

In Step S42, the control portion 11 determines whether or not a user operation to input one or a plurality of sets of the unique information and the designated print speed has been performed in the third input screen.

Herein, when determining that the user operation to input one or a plurality of sets of the unique information and the designated print speed has been performed (Yes in S42), the control portion 11 shifts the processing to Step S43. On the other hand, when determining that the user operation to input one or a plurality of sets of the unique information and the designated print speed has not been performed (No in S42), the control portion 11 waits for the user operation to input one or a plurality of sets of the unique information and the designated print speed in Step S42.

### <Step S43>

In Step S43, the control portion 11 acquires the one or a plurality of sets of the unique information and the designated print speed input by the user operation performed in the third input screen. The processing from Step S41 to Step S43 is executed by the first acquisition processing portion 71B of the control portion 11.

### <Step S44>

In Step S44, the control portion 11 generates the key data for each set of the unique information and the designated print speed acquired by the processing of Step S43. In addition, the control portion 11 adds the unique information used for generating the key data to each piece of the generated key data. The processing of Step S44 is executed by the generation processing portion 72 of the control portion 11.

### <Step S45>

In Step S45, the control portion 11 determines whether or not the generation of the key data has ended.

Specifically, the control portion 11 causes the operation display portion 32 of the terminal device 2 to display a continuance selection screen used for selecting whether or not to continue the generation of the key data. Then, the control portion 11 determines whether or not the generation of the key data has ended based on a user operation performed in the continuance selection screen.

Herein, when determining that the generation of the key data has ended (Yes in S45), the control portion 11 shifts the processing to Step S46. On the other hand, when determining that the generation of the key data has not ended (No in S45), the control portion 11 shifts the processing to Step S41.

### <Step S46>

In Step S46, the control portion 11 outputs each piece of the key data generated by the processing of Step S44. The processing of Step S46 is executed by the output processing portion 73B of the control portion 11.

Specifically, the control portion 11 stores each piece of the key data generated by the processing of Step S44 in the storage device 5 connected to the first connection portion 35.

It is note that alternatively, the control portion 11 may store each piece of the key data generated by the processing of Step S44 in the storage portion 34 of the terminal device 2. In this case, each piece of the key data stored in the storage portion 34 only needs to be stored in the storage device 5 connected to the first connection portion 35 by a user operating the terminal device 2.

### [Second print speed setting processing]

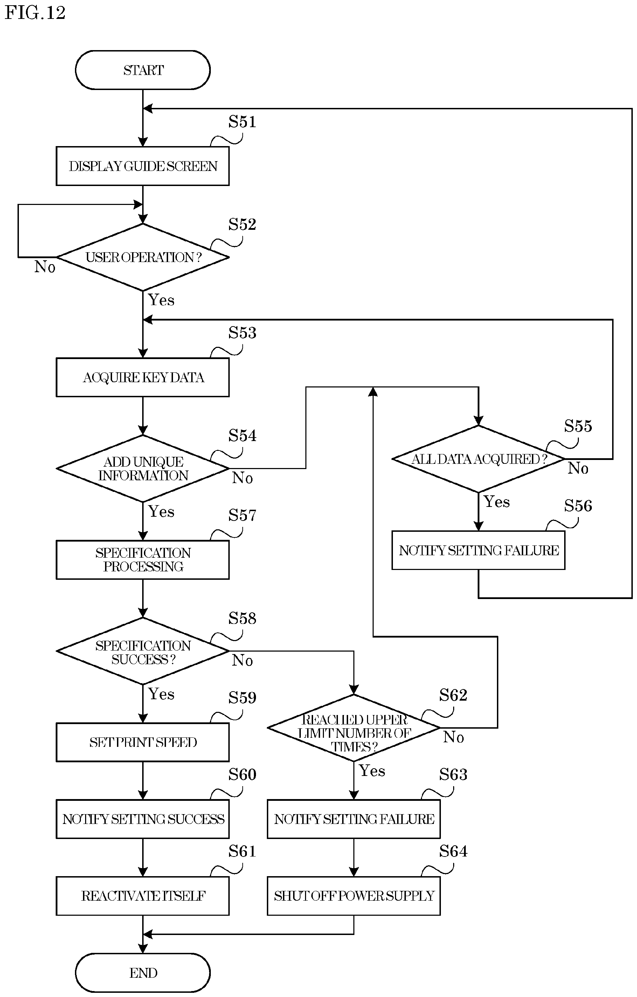

Next, with reference to Fig. 12, exemplary procedures of second print speed setting processing executed by the control portion 51 of the image forming apparatus 4 will be described. For example, the second print speed setting processing is executed when execution of the second print speed setting processing is instructed by the user operation performed in the operation display portion 56 in a state where writing to the nonvolatile memory 64 is not prohibited.

### <Step S51>

First, in Step S51, the control portion 51 causes the operation display portion 56 to display a guide screen including a message that prompts the user to connect the storage device 5 to the second connection portion 58.

### <Step S52>

In Step S52, the control portion 51 determines whether or not a user operation to connect the storage device 5 to the second connection portion 58 has been accepted.

Herein, when determining that the user operation to connect the storage device 5 to the second connection portion 58 has been accepted (Yes in S52), the control portion 51 shifts the processing to Step S53. On the other hand, when determining that the user operation to connect the storage device 5 to the second connection portion 58 has not been accepted (No in S52), the control portion 51 waits for the user operation to connect the storage device 5 to the second connection portion 58 in Step S52.

### <Step S53>

In Step S53, the control portion 51 acquires any one of the pieces of the key data from the storage device 5 connected to the second connection portion 58. The processing of Step S53 is executed by the second acquisition processing portion 81B of the control portion 51.

### <Step S54>

In Step S54, the control portion 51 determines whether or not the unique information of the image forming apparatus 4 is added to the key data acquired by the processing of Step S53.

Herein, when determining that the unique information of the image forming apparatus 4 is added to the acquired key data (Yes in S54), the control portion 51 shifts the processing to Step S57. On the other hand, when determining that the unique information of the image forming apparatus 4 is not added to the acquired key data (No in S54), the control portion 51 shifts the processing to Step S55.

### <Step S55>

In Step S55, the control portion 51 determines whether or not all pieces of the key data stored in the storage device 5 connected to the second connection portion 58 have been acquired.

Herein, when determining that all pieces of the key data stored in the storage device 5 connected to the second connection portion 58 have been acquired (Yes in S55), the control portion 51 shifts the processing to Step S56. On the other hand, when determining that all pieces of the key data stored in the storage device 5 connected to the second connection portion 58 have not been acquired (No in S55), the control portion 51 shifts the processing to Step S53. In this case, in Step S53 executed again, the control portion 51 acquires unacquired key data from the storage device 5 connected to the second connection portion 58.

### <Step S56>

In Step S56, the control portion 51 notifies that the setting (change) of the print speed has failed.

Specifically, the control portion 51 causes the operation display portion 56 to display the failure notification screen that includes a message notifying that the setting (change) of the print speed has failed. Then, the control portion 51 shifts the processing to Step S51 according to a user operation performed in the failure notification screen.

It is noted that before the failure notification screen is displayed since the user operation to connect the storage device 5 to the second connection portion 58 has been accepted, the being-set notification screen that includes a message notifying that the print speed is being set is displayed on the operation display portion 56.

### <Step S57>

In Step S57, the control portion 51 executes the specification processing for specifying the designated print speed based on the key data acquired by the processing of Step S53 and the unique information of the image forming apparatus 4. The processing of Step S57 is executed by the specification processing portion 82 of the control portion 51.

### <Step S58>

In Step S58, the control portion 51 causes the processing to branch depending on whether or not the specification of the designated print speed has succeeded in the processing of Step S57. Specifically, when succeeding in the specification of the designated print speed (Yes in S58), the control portion 51 shifts the processing to Step S59. On the other hand, when failing in the specification of the designated print speed (No in S58), the control portion 51 shifts the processing to Step S62.

### <Step S59>

In Step S59, the control portion 51 sets the print speed of the image forming apparatus 4 to the designated print speed specified by the processing of Step S57. The processing of Step S59 is executed by the setting processing portion 83A of the control portion 51.

Specifically, the control portion 51 stores the speed data indicating the designated print speed specified by the processing of Step S57 in the nonvolatile memory 64 in place of the speed data stored in the nonvolatile memory 64. In addition, after the storage of the speed data indicating the designated print speed specified by the processing of Step S57 in the nonvolatile memory 64, the control portion 51 prohibits writing of data to the nonvolatile memory 64.

It is noted that the control portion 51 only needs to shift the processing to Step S56 when failing to store the speed data indicating the designated print speed specified by the processing of Step S57 in the nonvolatile memory 64 or when failing to prohibit the writing of data to the nonvolatile memory 64.

### <Step S60>

In Step S60, the control portion 51 notifies that the setting (change) of the print speed has succeeded.

Specifically, the control portion 51 causes the operation display portion 56 to display the success notification screen that includes a message notifying that the setting (change) of the print speed has succeeded. Then, the control portion 51 shifts the processing to Step S61 after an elapse of a predetermined time since the start of the display of the success notification screen.

It is noted that before the success notification screen is displayed since the user operation to connect the storage device 5 to the second connection portion 58 has been accepted, the being-set notification screen is displayed on the operation display portion 56.

### <Step S61>

In Step S61, the control portion 51 reactivates the image forming apparatus 4. Thus, the image forming apparatus 4 becomes printable at the print speed set by the processing of Step S59.

### <Step S62>

In Step S62, the control portion 51 determines whether or not the number of failed times of the specification processing has reached the upper limit number of times.

Herein, when determining that the number of failed times of the specification processing has reached the upper limit number of times (Yes in S62), the control portion 51 shifts the processing to Step S63. On the other hand, when determining that the number of failed times of the specification processing has not reached the upper limit number of times (No in S62), the control portion 51 shifts the processing to Step S55.

### <Step S63>

In Step S63, the control portion 51 notifies that the setting (change) of the print speed has failed.

Specifically, the control portion 51 causes the operation display portion 56 to display the failure notification screen that includes a message notifying that the setting (change) of the print speed has failed. Then, the control portion 51 shifts the processing to Step S64 after an elapse of a predetermined time since the start of the display of the failure notification screen.

It is noted that before the failure notification screen is displayed since the user operation to connect the storage device 5 to the second connection portion 58 has been accepted, the being-set notification screen is displayed on the operation display portion 56.

### <Step S64>

In Step S64, the control portion 51 shuts off the power supply of the image forming apparatus 4. Thus, when the user of the image forming apparatus 4 tries to illegally change the print speed by a brute-force attack, a time for that task can be prolonged. Therefore, it is possible to suppress a situation where the user of the image forming apparatus 4 illegally changes the print speed by a brute-force attack.

In this manner, also in the print speed setting system 100B, similar to the print speed setting system 100A, it is possible to change the print speed of the image forming apparatus 4 that does not have the communication function for communicating via the communication network 3.

Further, in the print speed setting system 100B, the print speed of each of the image forming apparatuses 4 is set using the storage device 5 storing the key data. Thus, it is possible to avoid occurrence of an operational error when inputting the key data to the image forming apparatus 4 as compared to the configuration of the print speed setting system 100A.

It is noted that the print speed setting system 100B may include the first acquisition processing portion 71A, the output processing portion 73A, and the second acquisition processing portion 81A. In other words, the print speed setting system 100B may have the functions of the print speed setting system 100A.

In this case, in the print speed setting system 100B, the first key data output processing and the second key data output processing only need to be executed selectively. Moreover, in the processing of Step S51 in the second print speed setting processing, the selection screen only needs to be displayed in place of the guide screen so that the processing of Step S52 and the subsequent steps in the second print speed setting processing or the processing of Step S22 and the subsequent steps in the first print speed setting processing is executed in accordance with the user operation performed during display of the selection screen.

### [Third embodiment]

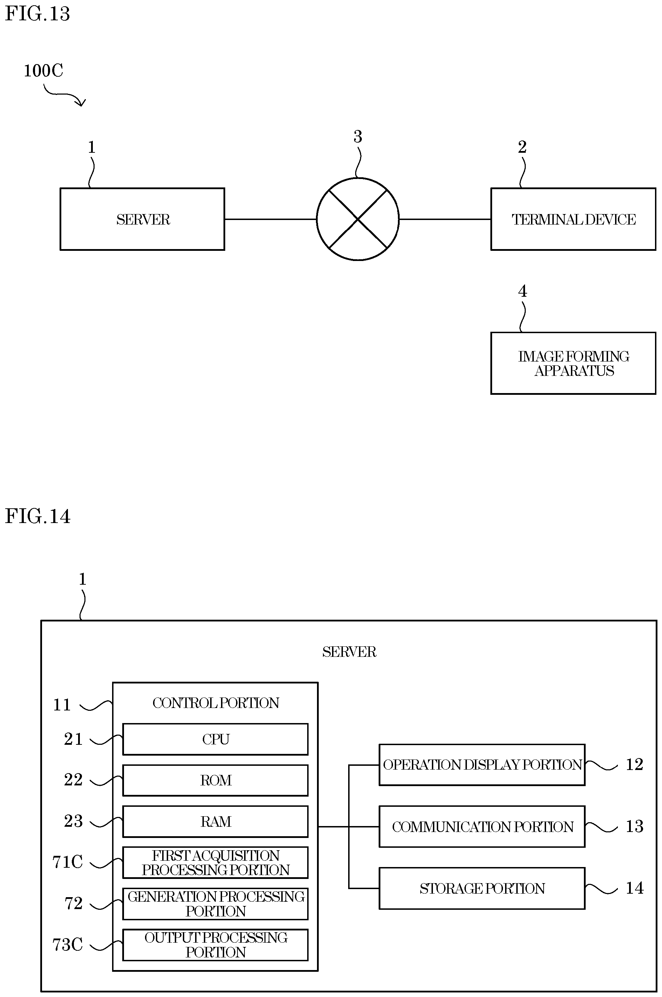

Next, a configuration of a print speed setting system 100C according to a third embodiment of the present disclosure will be described with reference to Fig. 13 to Fig. 16.

As shown in Fig. 1 and Fig. 13, similar to the print speed setting system 100A, the print speed setting system 100C includes the server 1, the terminal device 2, and the image forming apparatus 4. In addition, the print speed setting system 100C includes the plurality of image forming apparatuses 4.

In the print speed setting system 100C, the terminal device 2 is a mobile information processing apparatus such as a laptop personal computer, a smartphone, and a tablet terminal. Further, the terminal device 2 is capable of wirelessly communicating with the image forming apparatus 4 without passing through other communication devices. The terminal device 2 is an example of a mobile terminal according to the present disclosure.

As shown in Fig. 2 and Fig. 14, the server 1 of the print speed setting system 100C differs from the server 1 of the print speed setting system 100A in the point of including a first acquisition processing portion 71C and an output processing portion 73C in place of the first acquisition processing portion 71A and the output processing portion 73A. It is noted that other points are common between the server 1 of the print speed setting system 100A and the server 1 of the print speed setting system 100C.

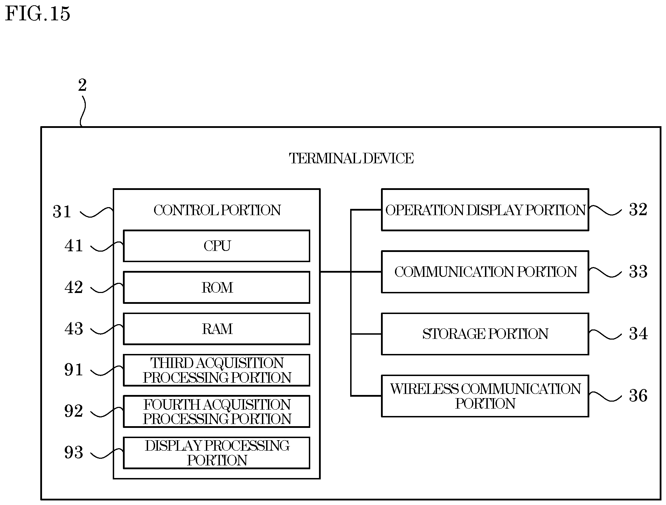

As shown in Fig. 3 and Fig. 15, the terminal device 2 of the print speed setting system 100C differs from the terminal device 2 of the print speed setting system 100A in the point of including a wireless communication portion 36. In addition, the terminal device 2 of the print speed setting system 100C differs from the terminal device 2 of the print speed setting system 100A in that a key data input program for causing the control portion 31 to function as a third acquisition processing portion 91, a fourth acquisition processing portion 92, and a display processing portion 93 shown in Fig. 15 is stored in advance in the storage portion 34. It is noted that other points are common between the terminal device 2 of the print speed setting system 100A and the terminal device 2 of the print speed setting system 100C. It is noted that some or all of the processing portions included in the control portion 31 of the terminal device 2 may be constituted of an electronic circuit. Further, the key data input program may alternatively be a program for causing a plurality of processors to function as the respective processing portions shown in Fig. 15.

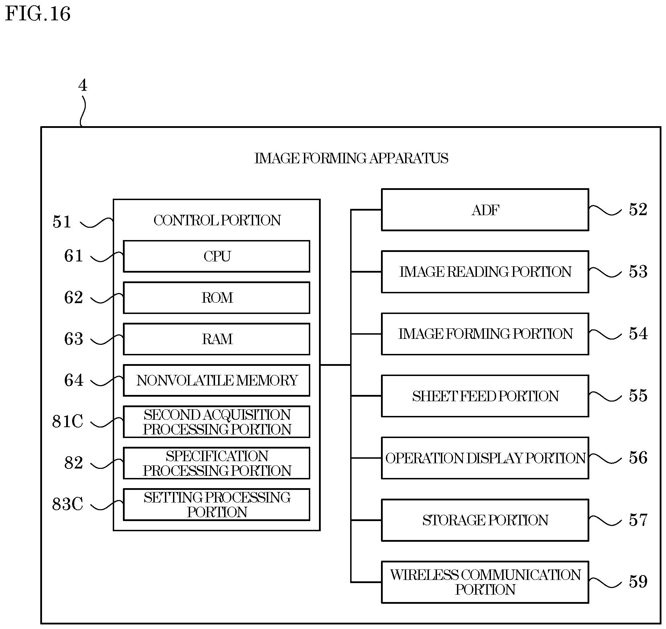

As shown in Fig. 4 and Fig. 16, the image forming apparatus 4 of the print speed setting system 100C differs from the image forming apparatus 4 of the print speed setting system 100A in the point of including a wireless communication portion 59. In addition, the image forming apparatus 4 of the print speed setting system 100C differs from the image forming apparatus 4 of the print speed setting system 100A in the point of including a second acquisition processing portion 81C and a setting processing portion 83C in place of the second acquisition processing portion 81A and the setting processing portion 83A. It is noted that other points are common between the image forming apparatus 4 of the print speed setting system 100A and the image forming apparatus 4 of the print speed setting system 100C.

The wireless communication portion 36 is a communication interface capable of executing wireless communication conforming to a predetermined communication standard with the image forming apparatus 4. For example, the communication standard is NFC (Near Field Communication) (ISO/IEC18092). It is noted that the communication standard is not limited to NFC and only needs to be a standard capable of directly executing wireless communication with the image forming apparatus 4 without passing through other communication devices as exemplified by Bluetooth.

The wireless communication portion 59 is a communication interface capable of executing wireless communication conforming to the communication standard with the terminal device 2.

The third acquisition processing portion 91 acquires the unique information from the image forming apparatus 4 for which the print speed is unset.

For example, the image forming apparatus 4 for which the print speed is unset is an image forming apparatus 4 in which writing of data to the nonvolatile memory 64 is prohibited.

For example, when the terminal device 2 exists within a communication range of the wireless communication conforming to the communication standard, the image forming apparatus 4 for which the print speed is unset transmits the unique information to the terminal device 2. The third acquisition processing portion 91 acquires the unique information transmitted from the image forming apparatus 4.

It is noted that when the image forming apparatus 4 exists within the communication range of the wireless communication conforming to the communication standard, the third acquisition processing portion 91 may request the image forming apparatus 4 to transmit the unique information. In this case, the image forming apparatus 4 that has been requested to transmit the unique information only needs to transmit the unique information when the print speed is unset, and when the print speed is already set, notify to that effect in place of the transmission of the unique information.

The fourth acquisition processing portion 92 acquires the designated print speed corresponding to the unique information acquired by the third acquisition processing portion 91.

For example, in the print speed setting system 100C, a plurality of pieces of correspondence relationship data respectively corresponding to the plurality of image forming apparatuses 4 are stored in advance in the storage portion 34 of the terminal device 2. The correspondence relationship data is data in which the unique information and the designated print speed are associated with each other.

For example, the fourth acquisition processing portion 92 acquires the correspondence relationship data including the unique information acquired by the third acquisition processing portion 91 from the storage portion 34. Then, the fourth acquisition processing portion 92 acquires the designated print speed included in the acquired correspondence relationship data.

It is noted that the fourth acquisition processing portion 92 may accept a user operation to input the designated print speed corresponding to the unique information acquired by the third acquisition processing portion 91, and acquire the information input by the accepted operation as the designated print speed.

The fourth acquisition processing portion 92 transmits (inputs) the acquired designated print speed and the unique information corresponding to the designated print speed to the server 1.

The first acquisition processing portion 71C acquires the unique information and the designated print speed input from the terminal device 2.

The generation processing portion 72 generates the key data based on the unique information and the designated print speed input from the terminal device 2.

The output processing portion 73C transmits (outputs) the key data generated by the generation processing portion 72 to the terminal device 2.

The second acquisition processing portion 81C acquires the key data from the terminal device 2. The second acquisition processing portion 81C is another example of the acquisition processing portion according to the present disclosure.

For example, when the image forming apparatus 4 that has acquired the unique information exists within the communication range of the wireless communication conforming to the communication standard, the terminal device 2 transmits the key data received from the server 1 to the image forming apparatus 4. The second acquisition processing portion 81C acquires the key data transmitted from the terminal device 2.

It is noted that when the terminal device 2 to which the unique information has been transmitted exists within the communication range of the wireless communication conforming to the communication standard, the second acquisition processing portion 81C may request the terminal device 2 to transmit the key data. In this case, the terminal device 2 that has been requested to transmit the key data only needs to transmit the key data when the key data is already received from the server 1, and when the key data is not yet received, notify to that effect in place of the transmission of the key data.

The specification processing portion 82 specifies the designated print speed based on the key data acquired by the second acquisition processing portion 81C and the unique information of the image forming apparatus 4.

The setting processing portion 83C sets the print speed of the image forming apparatus 4 to the designated print speed specified by the specification processing portion 82. For example, the setting processing portion 83C irrevocably sets the print speed of the image forming apparatus 4 to the designated print speed specified by the specification processing portion 82.

Further, after setting the print speed of the image forming apparatus 4, the setting processing portion 83C notifies the terminal device 2 to which the unique information has been transmitted of the print speed setting completion.

Specifically, after setting the print speed of the image forming apparatus 4, when the terminal device 2 to which the unique information has been transmitted exists within the communication range of the wireless communication conforming to the communication standard, the setting processing portion 83C transmits the print speed setting completion to the terminal device 2.

The display processing portion 93 causes the operation display portion 32 (an example of a display portion according to the present disclosure) to display the unique information of the image forming apparatus 4 for which the print speed setting has been completed.

For example, the display processing portion 93 causes the operation display portion 32 to display, in accordance with a predetermined user operation performed in the operation display portion 32, progress data indicating a progress of a print speed setting work for the plurality of image forming apparatuses 4 respectively corresponding to the plurality of pieces of correspondence relationship data stored in the storage portion 34. For example, the progress data includes a list of the unique information to which information indicating that the print speed is already set or information indicating that the print speed is unset is added.

Alternatively, the display processing portion 93 may cause the operation display portion 32 to display, in accordance with a predetermined user operation performed in the operation display portion 32, a list of the unique information of the image forming apparatus 4 for which the print speed setting has been completed.

### [Key data input processing]

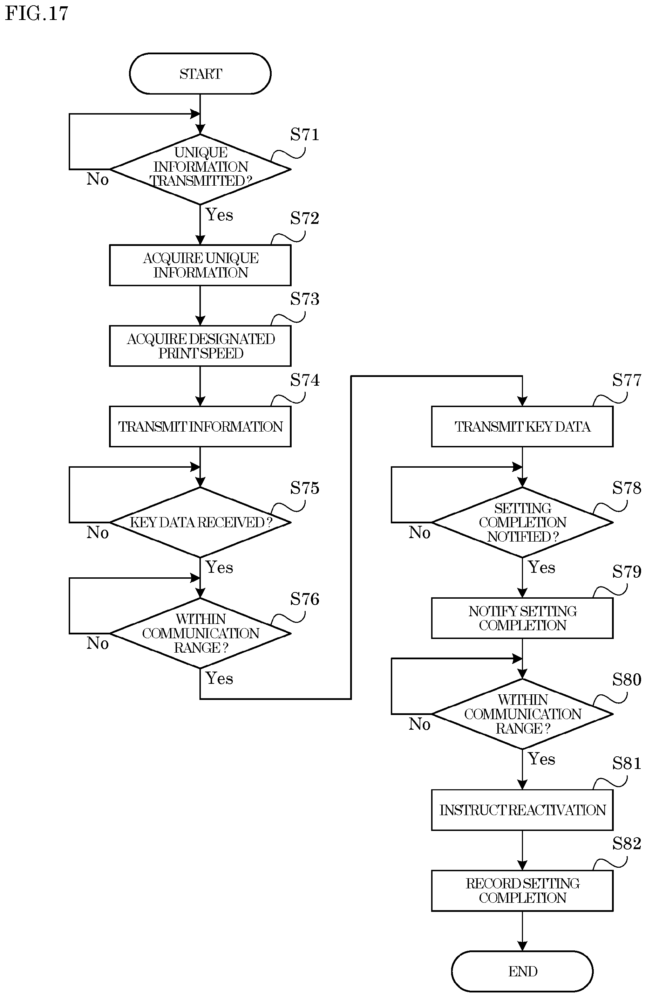

Hereinafter, with reference to Fig. 17, exemplary procedures of key data input processing executed by the control portion 31 of the terminal device 2 will be described. For example, the key data input processing is executed when the image forming apparatus 4 exists within the communication range of the wireless communication conforming to the communication standard.

### <Step S71>

First, in Step S71, the control portion 31 determines whether or not the unique information has been transmitted from the image forming apparatus 4 that exists within the communication range of the wireless communication conforming to the communication standard.

Herein, when determining that the unique information has been transmitted from the image forming apparatus 4 (Yes in S71), the control portion 31 shifts the processing to Step S72. On the other hand, when determining that the unique information has not been transmitted from the image forming apparatus 4 (No in S71), the control portion 31 waits for the transmission of the unique information from the image forming apparatus 4 in Step S71.

### <Step S72>

In Step S72, the control portion 31 acquires the unique information transmitted from the image forming apparatus 4. The processing of Step S72 is executed by the third acquisition processing portion 91 of the control portion 31.

### <Step S73>

In Step S73, the control portion 31 acquires the designated print speed corresponding to the unique information acquired by the processing of Step S72. The processing of Step S73 is executed by the fourth acquisition processing portion 92 of the control portion 31.

For example, the control portion 31 acquires the correspondence relationship data including the unique information acquired by the processing of Step S72 from the storage portion 34. Then, the control portion 31 acquires the designated print speed included in the acquired correspondence relationship data.

### <Step S74>

In Step S74, the control portion 31 transmits the unique information acquired by the processing of Step S72 and the designated print speed acquired by the processing of Step S73 to the server 1. The processing of Step S74 is executed by the fourth acquisition processing portion 92 of the control portion 31.

### <Step S75>

In Step S75, the control portion 31 determines whether or not the key data corresponding to the information transmitted by the processing of Step S74 has been received from the server 1.

Herein, when determining that the key data has been received from the server 1 (Yes in S75), the control portion 31 shifts the processing to Step S76. On the other hand, when determining that the key data has not been received from the server 1 (No in S75), the control portion 31 waits for the reception of the key data from the server 1 in Step S75.

### <Step S76>

In Step S76, the control portion 31 determines whether or not the image forming apparatus 4 as a transmission source of the unique information exists within the communication range of the wireless communication conforming to the communication standard.

Herein, when determining that the image forming apparatus 4 as the transmission source of the unique information exists within the communication range of the wireless communication conforming to the communication standard (Yes in S76), the control portion 31 shifts the processing to Step S77. On the other hand, when determining that the image forming apparatus 4 as the transmission source of the unique information does not exist within the communication range of the wireless communication conforming to the communication standard (No in S76), the control portion 31 waits for the image forming apparatus 4 as the transmission source of the unique information to appear within the communication range of the wireless communication conforming to the communication standard in Step S76.

### <Step S77>

In Step S77, the control portion 31 transmits the key data received from the server 1 to the image forming apparatus 4 as the transmission source of the unique information.

### <Step S78>

In Step S78, the control portion 31 determines whether or not the print speed setting completion has been notified from the image forming apparatus 4 as the transmission source of the unique information.

Herein, when determining that the print speed setting completion has been notified from the image forming apparatus 4 as the transmission source of the unique information (Yes in S78), the control portion 31 shifts the processing to Step S79. On the other hand, when determining that the print speed setting completion has not been notified from the image forming apparatus 4 as the transmission source of the unique information (No in S78), the control portion 31 waits for the notification of the print speed setting completion from the image forming apparatus 4 as the transmission source of the unique information in Step S78.

<Step S79>

In Step S79, the control portion 31 notifies that the print speed setting completion has been notified from the image forming apparatus 4 as the transmission source of the unique information.

Specifically, the control portion 31 causes the operation display portion 32 to display a setting completion screen that includes a message notifying that the print speed setting completion has been notified from the image forming apparatus 4 as the transmission source of the unique information.

### <Step S80>

In Step S80, the control portion 31 determines whether or not the image forming apparatus 4 as the transmission source of the unique information exists within the communication range of the wireless communication conforming to the communication standard.

Herein, when determining that the image forming apparatus 4 as the transmission source of the unique information exists within the communication range of the wireless communication conforming to the communication standard (Yes in S80), the control portion 31 shifts the processing to Step S81. On the other hand, when determining that the image forming apparatus 4 as the transmission source of the unique information does not exist within the communication range of the wireless communication conforming to the communication standard (No in S80), the control portion 31 waits for the image forming apparatus 4 as the transmission source of the unique information to appear within the communication range of the wireless communication conforming to the communication standard in Step S80.

### <Step S81>

In Step S81, the control portion 31 instructs the image forming apparatus 4 as the transmission source of the unique information to reactivate itself.

### <Step S82>

In Step S82, the control portion 31 records the print speed setting completion for the image forming apparatus 4 as the transmission source of the unique information.

For example, the control portion 31 stores the unique information of the image forming apparatus 4 as the transmission source of the unique information in a predetermined specific storage area of the storage portion 34. Thus, it becomes possible to generate the progress data based on the plurality of pieces of correspondence relationship data stored in the storage portion 34 and the unique information stored in the specific storage area.

### [Third key data output processing]

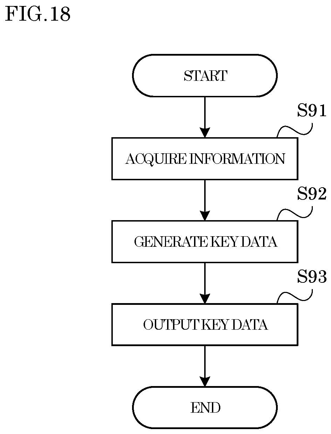

Next, with reference to Fig. 18, exemplary procedures of third key data output processing executed by the control portion 11 of the server 1 will be described. For example, the third key data output processing is executed when the unique information and the designated print speed are transmitted from the terminal device 2.

### <Step S91>

In Step S91, the control portion 11 acquires the unique information and the designated print speed transmitted from the terminal device 2. The processing of Step S91 is executed by the first acquisition processing portion 71C of the control portion 11.

### <Step S92>

In Step S92, the control portion 11 generates the key data based on the unique information and the designated print speed acquired by the processing of Step S91. The processing of Step S92 is another example of the generation step according to the present disclosure and is executed by the generation processing portion 72 of the control portion 11.

### <Step S93>

In Step S93, the control portion 11 transmits (outputs) the key data generated by the processing of Step S92 to the terminal device 2 as a transmission source of the unique information and the designated print speed. The processing of Step S93 is another example of the output step according to the present disclosure and is executed by the output processing portion 73C of the control portion 11.

### [Third print speed setting processing]

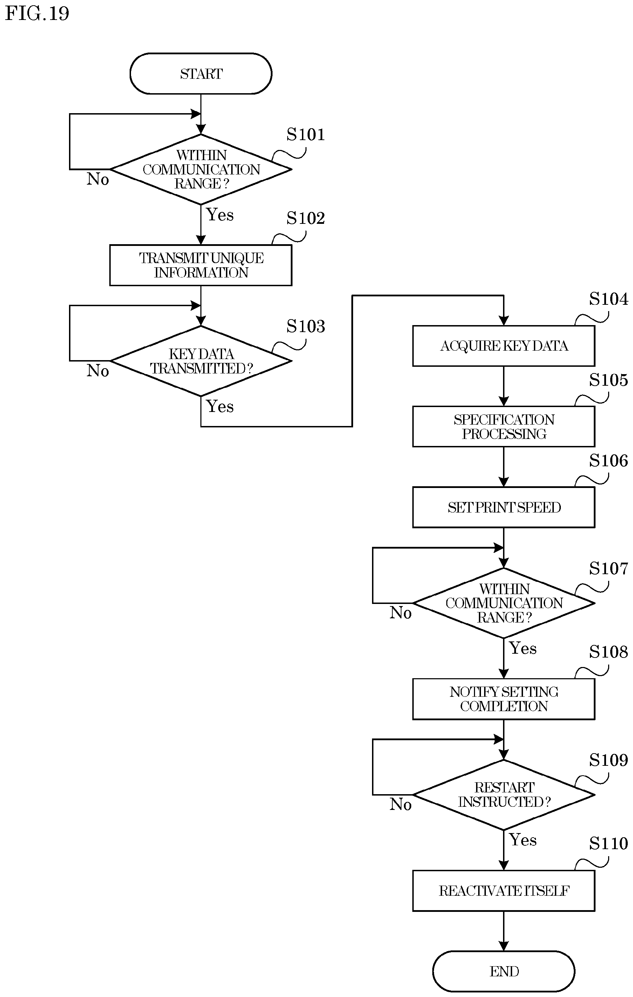

Next, with reference to Fig. 19, exemplary procedures of third print speed setting processing executed by the control portion 51 of the image forming apparatus 4 will be described. For example, the third print speed setting processing is executed when writing to the nonvolatile memory 64 is not prohibited in a case where the power supply of the image forming apparatus 4 is turned on.

### <Step S101>

First, in Step S101, the control portion 51 determines whether or not the terminal device 2 exists within the communication range of the wireless communication conforming to the communication standard.

Herein, when determining that the terminal device 2 exists within the communication range of the wireless communication conforming to the communication standard (Yes in S101), the control portion 51 shifts the processing to Step S102. On the other hand, when determining that the terminal device 2 does not exist within the communication range of the wireless communication conforming to the communication standard (No in S101), the control portion 51 waits for the terminal device 2 to appear within the communication range of the wireless communication conforming to the communication standard in Step S101.

### <Step S102>

In Step S102, the control portion 51 transmits the unique information of itself to the terminal device 2.

### <Step S103>

In Step S103, the control portion 51 determines whether or not the key data has been transmitted from the terminal device 2 to which the unique information has been transmitted.

Herein, when determining that the key data has been transmitted from the terminal device 2 to which the unique information has been transmitted (Yes in S103), the control portion 51 shifts the processing to Step S104. On the other hand, when determining that the key data has not been transmitted from the terminal device 2 to which the unique information has been transmitted (No in S103), the control portion 51 waits for the transmission of the key data from the terminal device 2 to which the unique information has been transmitted in Step S103.

### <Step S104>

In Step S104, the control portion 51 acquires the key data transmitted from the terminal device 2 to which the unique information has been transmitted. The processing of Step S104 is another example of the acquisition step according to the present disclosure and is executed by the second acquisition processing portion 81C of the control portion 51.

### <Step S105>

In Step S105, the control portion 51 executes the specification processing for specifying the designated print speed based on the key data acquired by the processing of Step S104 and the unique information of itself. The processing of Step S105 is another example of the specification step according to the present disclosure and is executed by the specification processing portion 82 of the control portion 51.

### <Step S106>

In Step S106, the control portion 51 sets the print speed of itself to the designated print speed specified by the processing of Step S105. The processing of Step S106 is another example of the setting step according to the present disclosure and is executed by the setting processing portion 83C of the control portion 51.

Specifically, the control portion 51 stores the speed data indicating the designated print speed specified by the processing of Step S105 in the nonvolatile memory 64 in place of the speed data stored in the nonvolatile memory 64. In addition, after the storage of the speed data indicating the designated print speed specified by the processing of Step S105 in the nonvolatile memory 64, the control portion 51 prohibits writing of data to the nonvolatile memory 64.

### <Step S107>

In Step S107, the control portion 51 determines whether or not the terminal device 2 to which the unique information has been transmitted exists within the communication range of the wireless communication conforming to the communication standard.

Herein, when determining that the terminal device 2 to which the unique information has been transmitted exists within the communication range of the wireless communication conforming to the communication standard (Yes in S107), the control portion 51 shifts the processing to Step S108. On the other hand, when determining that the terminal device 2 to which the unique information has been transmitted does not exist within the communication range of the wireless communication conforming to the communication standard (No in S107), the control portion 51 waits for the terminal device 2 to which the unique information has been transmitted to appear within the communication range of the wireless communication conforming to the communication standard in Step S107.

### <Step S108>

In Step S108, the control portion 51 notifies the terminal device 2 to which the unique information has been transmitted of the print speed setting completion. The processing of Step S108 is executed by the setting processing portion 83C of the control portion 51.

It is noted that when failing to store the speed data indicating the designated print speed specified by the processing of Step S105 in the nonvolatile memory 64 or when failing to prohibit the writing of data to the nonvolatile memory 64, the control portion 51 may notify a print speed setting failure in place of the notification of the print speed setting completion. In addition, the control portion 51 may notify a reason for the failure along with the notification of the print speed setting failure.

### <Step S109>

In Step S109, the control portion 51 determines whether or not restart has been instructed from the terminal device 2 to which the unique information has been transmitted.

Herein, when determining that restart has been instructed from the terminal device 2 to which the unique information has been transmitted (Yes in S109), the control portion 51 shifts the processing to Step S110. On the other hand, when determining that restart has not been instructed from the terminal device 2 to which the unique information has been transmitted (No in S109), the control portion 51 waits for the instruction to restart from the terminal device 2 to which the unique information has been transmitted in Step S109.

### <Step S110>

In Step S110, the control portion 51 reactivates itself. Thus, the image forming apparatus 4 becomes printable at the print speed set by the processing of Step S106.

In this manner, also in the print speed setting system 100C, similar to the print speed setting system 100A, it is possible to change the print speed of the image forming apparatus 4 that does not have the communication function for communicating via the communication network 3.

Further, in the print speed setting system 100C, it is possible to cause the operation display portion 32 to display the unique information of the image forming apparatus 4 for which the print speed setting has been completed. Thus, when the print speed is set for each of the plurality of image forming apparatuses 4, it is possible to check a workload of a worker who performs a setting work and a progress of the setting work.

Furthermore, in the print speed setting system 100C, the unique information of the image forming apparatus 4 is acquired by the third acquisition processing portion 91 of the terminal device 2. Thus, an input work by the user can be saved more than in a configuration in which the user of the terminal device 2 manually inputs the unique information of the image forming apparatus 4 as the print speed setting target.

It is noted that the print speed setting system 100C may include the first acquisition processing portion 71A, the first acquisition processing portion 71B, the output processing portion 73A, the output processing portion 73B, the first connection portion 35, the second connection portion 58, the second acquisition processing portion 81A, the second acquisition processing portion 81B, the setting processing portion 83A, and the shut-off processing portion 84. In other words, the print speed setting system 100C may have the functions of the print speed setting system 100A and the functions of the print speed setting system 100B.

In this case, in the print speed setting system 100C, the first key data output processing and the second key data output processing only need to be executed selectively. Moreover, in the processing of Step S51 in the second print speed setting processing, the selection screen only needs to be displayed in place of the guide screen so that the processing of Step S52 and the subsequent steps in the second print speed setting processing or the processing of Step S22 and the subsequent steps in the first print speed setting processing is executed in accordance with the user operation performed during display of the selection screen. Further, when the print speed setting processing by the third print speed setting processing is started during the setting of the print speed by the first print speed setting processing or the second print speed setting processing, execution of the print speed setting processing by the third print speed setting processing only needs to be suspended until the preceding print speed setting processing ends. The same holds true for a case where the print speed setting processing by the first print speed setting processing or the second print speed setting processing is started during the setting of the print speed by the third print speed setting processing. Furthermore, an operation input in the operation display portion 56 and the execution of the first print speed setting processing and the second print speed setting processing may be restricted while the third print speed setting processing is being executed. Moreover, the execution of the third print speed setting processing may be restricted while the first print speed setting processing or the second print speed setting processing is being executed.

### [Notes of disclosure]

Hereinafter, a general outline of the disclosure extracted from the embodiment described above will be noted. It is noted that the respective configurations and processing functions described in the notes below can be sorted and arbitrarily combined as appropriate.

### <Note 1>

A print speed setting system, including: an information processing system; and an image forming apparatus capable of varying a print speed, in which the information processing system includes a generation processing portion which generates key data based on unique information unique to the image forming apparatus and a designated print speed of the image forming apparatus, and an output processing portion which outputs the key data generated by the generation processing portion to a mobile terminal capable of wirelessly communicating with the image forming apparatus without passing through other communication devices, and the image forming apparatus includes an acquisition processing portion which acquires the key data from the mobile terminal, a specification processing portion which specifies the designated print speed based on the key data acquired by the acquisition processing portion and the unique information of the image forming apparatus, and a setting processing portion which sets a print speed of the image forming apparatus to the designated print speed specified by the specification processing portion.

### <Note 2>

The print speed setting system according to note 1, including: the mobile terminal, in which the setting processing portion notifies, after setting the print speed of the image forming apparatus, the mobile terminal of a completion of the setting of the print speed, and the mobile terminal includes a display portion, and a display processing portion which causes the display portion to display the image forming apparatus for which the setting of the print speed has been completed.

<Note 3>

The print speed setting system according to note 2, in which the mobile terminal acquires the unique information from the image forming apparatus for which the print speed is unset, and the generation processing portion generates the key data based on the unique information and the designated print speed input from the mobile terminal.

### <Note 4>

The print speed setting system according to any one of notes 1 to 3, in which the setting processing portion irrevocably sets the print speed of the image forming apparatus to the designated print speed specified by the specification processing portion.

### <Note 5>

An image forming apparatus capable of varying a print speed, including: an acquisition processing portion which acquires key data generated based on unique information unique to the image forming apparatus and a designated print speed of the image forming apparatus from a mobile terminal capable of wirelessly communicating with the image forming apparatus without passing through other communication devices; a specification processing portion which specifies the designated print speed based on the key data acquired by the acquisition processing portion and the unique information of the image forming apparatus, and a setting processing portion which sets a print speed of the image forming apparatus to the designated print speed specified by the specification processing portion.

### <Note 6>

A print speed setting method executed in a print speed setting system including an information processing system and an image forming apparatus capable of varying a print speed, the print speed setting method including: in the information processing system, a generation step of generating key data based on unique information unique to the image forming apparatus and a designated print speed of the image forming apparatus; and an output step of outputting the key data generated in the generation step to a mobile terminal capable of wirelessly communicating with the image forming apparatus without passing through other communication devices, and in the image forming apparatus, an acquisition step of acquiring the key data from the mobile terminal; a specification step of specifying the designated print speed based on the key data acquired in the acquisition step and the unique information of the image forming apparatus; and a setting step of setting a print speed of the image forming apparatus to the designated print speed specified in the specification step.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. A print speed setting system (100C), comprising:
an information processing system; and
an image forming apparatus (4) capable of varying a print speed, wherein
the information processing system includes
a generation processing portion (72) which generates key data based on unique information unique to the image forming apparatus (4) and a designated print speed of the image forming apparatus (4), and
an output processing portion (73C) which outputs the key data generated by the generation processing portion (72) to a mobile terminal (2) capable of wirelessly communicating with the image forming apparatus (4) without passing through other communication devices, and
the image forming apparatus (4) includes
an acquisition processing portion (81C) which acquires the key data from the mobile terminal (2),
a specification processing portion (82) which specifies the designated print speed based on the key data acquired by the acquisition processing portion (81C) and the unique information of the image forming apparatus (4), and
a setting processing portion (83C) which sets a print speed of the image forming apparatus (4) to the designated print speed specified by the specification processing portion (82).

2. The print speed setting system (100C) according to claim 1, comprising:
the mobile terminal (2), wherein
the setting processing portion (83C) notifies, after setting the print speed of the image forming apparatus (4), the mobile terminal (2) of a completion of the setting of the print speed, and
the mobile terminal (2) includes
a display portion (32), and
a display processing portion (93) which causes the display portion (32) to display the image forming apparatus (4) for which the setting of the print speed has been completed.

3. The print speed setting system (100C) according to claim 2, wherein
the mobile terminal (2) acquires the unique information from the image forming apparatus (4) for which the print speed is unset, and
the generation processing portion (72) generates the key data based on the unique information and the designated print speed input from the mobile terminal (2).

4. The print speed setting system (100C) according to any one of claim 1 to 3, wherein
the setting processing portion (83C) irrevocably sets the print speed of the image forming apparatus (4) to the designated print speed specified by the specification processing portion (82).

5. An image forming apparatus (4) capable of varying a print speed, comprising:
an acquisition processing portion (81C) which acquires key data generated based on unique information unique to the image forming apparatus (4) and a designated print speed of the image forming apparatus (4) from a mobile terminal (2) capable of wirelessly communicating with the image forming apparatus (4) without passing through other communication devices;
a specification processing portion (82) which specifies the designated print speed based on the key data acquired by the acquisition processing portion (81C) and the unique information of the image forming apparatus (4), and
a setting processing portion (83C) which sets a print speed of the image forming apparatus (4) to the designated print speed specified by the specification processing portion (82).

6. A print speed setting method executed in a print speed setting system (100C) including an information processing system and an image forming apparatus (4) capable of varying a print speed, the print speed setting method comprising:
in the information processing system,
a generation step of generating key data based on unique information unique to the image forming apparatus (4) and a designated print speed of the image forming apparatus (4); and
an output step of outputting the key data generated in the generation step to a mobile terminal (2) capable of wirelessly communicating with the image forming apparatus (4) without passing through other communication devices, and
in the image forming apparatus (4),
an acquisition step of acquiring the key data from the mobile terminal (2);
a specification step of specifying the designated print speed based on the key data acquired in the acquisition step and the unique information of the image forming apparatus (4); and
a setting step of setting a print speed of the image forming apparatus (4) to the designated print speed specified in the specification step.
